# EUROPEAN PATENT APPLICATION

(11) **EP 1 102 104 A2**
(43) Date of publication of application: **23.05.2001**
(21) Application number: 00309833.2
(22) Date of filing: 06.11.2000
(51) Int. Cl.: G02B 26/02, G02B 26/08

(54) **Optical switch**

(30) Priority: 17.11.1999 US 166156 P; 25.02.2000 US 513744
(71) Applicant: LUCENT TECHNOLOGIES INC., Murray Hill, New Jersey 07974-0636 (US)
(72) Inventor: Aksyuk, Vladmir Anatolyevich, Piscataway, New Jersey 08854 (US); Bishop, David John, Summit, New Jersey 07901 (US); Bolle, Christian A., Somerset, New Jersey 08807 (US); Giles, Randy Clinton, Whippany, New Jersey 07981 (US); Pardo, Flavio, New Providence, New Jersey 07974 (US)
(74) Representative: Buckley, Christopher Simon Thirsk

(57) **Abstract**

An optical switch for use in optical applications utilizes a MEMS reflective shutter (28) and at least one reflecting device (27) to provide optical switching between an input (22) and two or more outputs (24,26) while reducing the amount of physical space required to position the respective input and outputs, and thereby minimize the size of the optical switch.

## Description

### RELATED APPLICATION

This application claims priority from provisional application Serial No. 60/166,156 filed on November 17, 1999 .

### BACKGROUND OF THE INVENTION

### 1. Field of the Invention

The present invention relates to optical switches and, more particularly, to optical switches employing micro-electro-mechanical systems (MEMS) devices to perform the optical switching.

### 2. Description of the Related Art

Silicon surface micro machining is a type of MEMS technology that exploits lithographic mass fabrication techniques that are used by the semiconductor industry in the manufacture of silicon integrated circuits. Generally, the technology involves the shaping of a multi-layer structure by sequentially depositing and shaping layers of a multi-layer wafer that typically includes a plurality of polysilicon layers separated by layers of silicon oxide and silicon nitride. The shaping of individual layers is generally done by etching which is controlled by masks that are patterned by photolithographic techniques. The technology also includes the etching of intermediate sacrificial layers of the wafer to release overlying layers for use as thin elements that can be easily deformed or moved.

Optical switches play vital roles in many optical systems, particularly in optical networks that require rapid and flexible reconfiguration. Examples of such roles include protective switching of optical transmission links, the reconfiguration of optical cross-connects, and implementation of add/drop modules (ADM) for wavelength division multiplexed (WDM) systems. A wide variety of optical switches have been implemented, some of which include MEMS devices. Yet, despite this wide variety, none of these optical switches provide the combination of high speed optical performance, ultra-compact size, low actuation voltage, and ultra-low power consumption with the potential of easy fabrication, low cost and suitability for use both in demanding gigabit optical networks and in cost-sensitive applications, such as fiber-to-the-home.

### SUMMARY OF THE INVENTION

It is therefore an object of the invention to provide various optical switch configurations using a MEMS shutter element.

This and other objects are achieved in accordance with the invention in an optical switch having an input for receiving an input light wave and a first MEMS shutter disposed adjacent the input and operatively adjustable between a first non-reflecting position and a second reflecting position. A first output is coaxially aligned with the input to receive the input light wave when the first MEMS shutter is in its first non-reflecting position. When disposed in the second reflecting position, the first MEMS shutter receives and reflects the input light wave in a first predetermined direction. A second output is arranged substantially parallel to and axially offset from the input and is adapted to receive the reflected input light wave when the first MEMS shutter is in the second reflecting position. A reflecting means is positioned in a path of the first predetermined direction so as to cooperate with the first MEMS shutter when in its second reflecting position to further reflect and thereby re-direct the input light wave reflected by the first MEMS shutter toward the second output.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims.

### BRIEF DESCRIPTION OF THE DRAWINGS

In the drawings wherein like reference numerals denote similar elements throughout the several views:
Figure 1 is a schematic representation of a 1 x 2 optical switch of the prior art;
Figure 2a is a schematic representation of a 1 x 2 optical switch in accordance with an embodiment of the present invention;
Figure 2b is a schematic representation of a 1 x 2 optical switch in accordance with another embodiment of the invention;
Figure 2c is a schematic representation of a 1 x 3 optical switch in accordance with yet another embodiment of the invention;
Figure 3a is a schematic representation of a 1 x 2 optical switch in a first switched position using MEMS rotating mirrors according to an embodiment of the invention; and
Figure 3b is a schematic representation of a 1 x 2 optical switch in a second switched position using MEMS rotating mirrors according to the invention.

### DETAILED DESCRIPTION OF THE PRESENTLY PREFERRED EMBODIMENTS

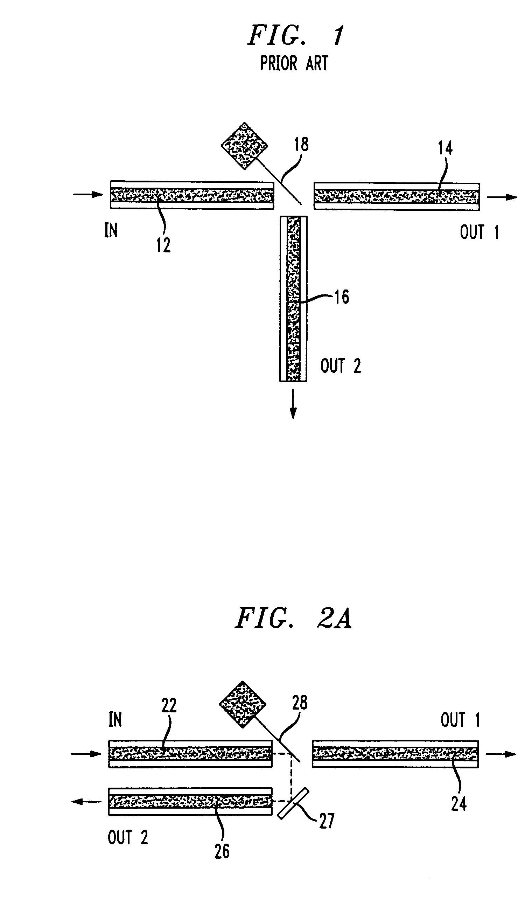

Figure 1 shows a prior art 1 x 2 optical switch that is useful to divert light from a source wave guide, such as fiber 12, into either of two output wave guides, such as fibers 14 and 16, by the action of a shutter 18 that is controlled by an actuator. The control and operation of shutter 18 is disclosed in commonly assigned and co-pending U.S. Patent Application Serial No. 09/197,317, the entire contents of which are incorporated herein by reference. It will be appreciated that when the shutter 18 is outside of the gap formed between the fibers, light emitted from source fiber 12 will enter only the coaxially aligned fiber 14. However, if shutter 18 is interposed in the gap (as shown), and is constructed so as to be highly reflective of incident light and properly oriented at the appropriate angle to the light emitted from the source fiber, the reflected light will enter fiber 16 that is predeterminately aligned to collect the reflected light. In the T-configuration depicted, fiber 16 is aligned at a right angle to the direction of light emission from source fiber 12, in so that shutter 18 should be oriented to form a 45° angle to the direction of emitted light. In order to minimize the insertion loss for such an arrangement using a comparably larger gap, wave guides with small acceptance angle producing low divergence light beams, such as expanded mode fibers, may be employed.

Arranging fibers in a T-configuration can, however, result in inefficient utilization of package real estate and complicate the packaging process. Furthermore, it is difficult to place arrays of fiber switches in a single package using T-fiber arrangements.

Figures 2a-2c show arrangements in accordance with the invention in which MEMS mirrors enable the optical fibers to be placed in parallel configurations, suitable for one- or two-port packages and the use of fiber ribbon arrays for ease of packaging switch arrays. In these configurations, there are no relay or imaging optics in place, so that in the case of conventional single-mode fibers, the gaps between fibers must be small to limit diffraction losses. Gaps between the fibers will likely be in the range of 125-200 microns, as determined by the fiber outside diameter and the required clearances around the mirrors. Diffraction losses may, for example, be limited by using fiber pigtails having expanded mode ends to increase the mode size and thereby reduce the diffraction loss. Expanded mode diameters of 30 microns may be utilized, resulting in potentially less than 1dB loss through the switch. An upper limit on the mode field size can in any event arise from the practical limit of mirror motion -- i.e. the ability to move the mirror in and out of the beam path. Those of ordinary skill will recognize that in order to further minimize losses, the fibers may be right angle cleaved and coated so as to be anti-reflective.

Figure 2a depicts an embodiment of a 1 x 2 optical switch having an input 22, an output 24 coaxially aligned with input 22, and another output wave guide (fiber) 26 arranged parallel to input 22. The input 22 and outputs 24 and 26 are adapted to receive wave guides, fiber optic cables (optic fibers), or any other suitable carrier for light waves. The MEMS shutter 28 is selectively interposed between input 22 and coaxially aligned output fiber 24 to selectively, operatively redirect the light wave signals from input 22 in a predetermined direction toward output fiber 26 via a fixed mirror 27. Fixed mirror 27 is disposed in front of the end of output 26 at a predetermined angle so as to lie in the path of the predetermined direction of the reflected light wave signal from shutter 28 (when interposed between input 22 and output 24) so that the light wave is reflected (i.e. re-directed) into output 26.

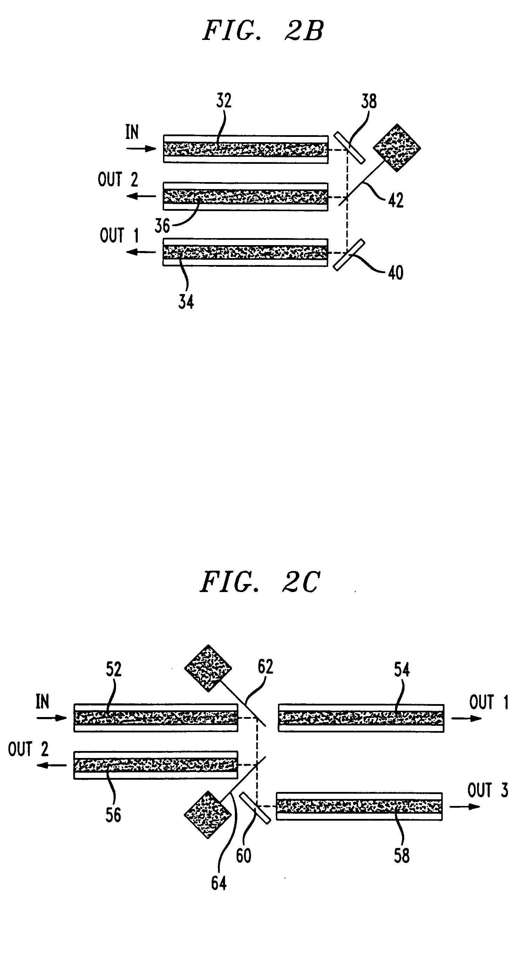

Figure 2b shows another embodiment of a 1 x 2 optical switch in which the input fiber 32 and both output fibers 34 and 36 are arranged in parallel relation to one another. In this configuration a first fixed mirror 38 is positioned at the input 32 and adapted to reflect the input light wave downward in a predetermined direction toward a second fixed mirror 40 disposed in front of output fiber 34 when MEMS shutter 42 is not interposed into the light wave signal path. The second fixed mirror is positioned within the reflected light wave signal path from the predetermined direction and angled or oriented so as to receive the reflected input light wave signal from fixed mirror 38 and to redirect or further reflect it into output fiber 34. When shutter 42 is actuated and interposed into the path of the light wave signal traveling in the predetermined direction determined by fixed mirror 38, the input light wave signal is reflected in a predetermined direction to the second output fiber 36.

Figure 2c depicts a schematic representation of a 1 x 3 optical switch having an input 52, a first output 54 coaxially aligned with input 52, a second output 56 arranged in parallel with input 52, and a third output 58 displaced axially and longitudinally from input 52. In this configuration a first MEMS shutter 62 is disposed in front of input 52 and a MEMS second shutter 64 is arranged in front of the second output 56. A fixed mirror 60 is located in front of the third output 58. A light wave applied to input 52 via an optic fiber or otherwise is coupled with the coaxially aligned output 54 when shutter 62 is not interposed within the gap defined therebetween. The interposition of shutter 62 in front of input 52, on the other hand, causes the input light wave signal to be reflected in a first predetermined direction toward either of the two remaining outputs 56 and 58. When the second shutter 64 is actuated and interposed into the light wave signal path as the light wave travels in the first predetermined direction from shutter 62, the light wave signals are reflected in a second predetermined direction toward output 56. When shutter 64 is not interposed in the light wave signal path as the light wave travels in the first predetermined direction, the reflected light from first shutter 62 is received by fixed mirror 60 which further reflects the light wave in a third predetermined direction toward output 58.

In accordance with the invention, mirrors 27, 38, 40 and 60 are preferably MEMS mirrors, although, those of ordinary skill in the art will recognize that operation of the optical switches depicted in Figures 2a-2c may utilize other types of reflectors or mirrors suitable for optical systems without departing from the spirit of the invention.

It will be understood by those of ordinary skill that the position and angles of the shutters and fixed mirrors is such that the light wave should be reflected with minimum losses and directed as accurately as possible toward the desired output optical fiber. The reflective surface of the shutter and the preparation of the ends of the fibers may be as described in co-pending U.S. Patent Application Serial No. 09/197,317 filed on November 20, 1998, the entire contents of which are incorporated herein by reference.

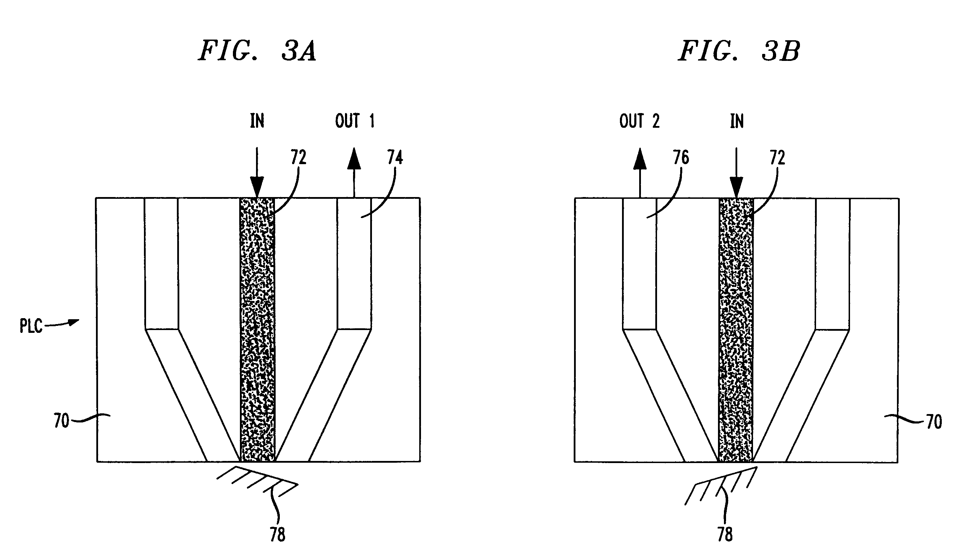

Figures 3a and 3b depict another embodiment of a 1 x 2 optical switch in accordance with the invention and combining the use of MEMS mirrors with Planar Light wave Circuits (PLC, silica on silicon, e.g. as found in wave guide grating routers). Those of ordinary skill will recognize that various different kinds of rotating MEMS mirrors, and even multiple MEMS mirrors, may be utilized herein without departing from the spirit of the invention. In this embodiment, switch implementation is simplified because the MEMS devices are located at the edge of the PLC, rather than requiring their placement in holes or slots specially defined or configured therefor. The PLC facilitates the use of different mirror arrangements, including mirrors that rotate on an axis oriented normal to the PLC.

As shown in Figures 3a and 3b, the input fiber 72 and output fibers 74, 76 are formed on the PLC and a rotating MEMS mirror 78 is positioned at an edge of PLC 70 in front of an input fiber 72. MEMS mirror 78 is disposed in Figure 3a in a first switching position to reflect the light wave from input 72 into output fiber 74. When mirror 78 is on the other hand switched to a second switching position (Figure 3b), the light wave from input 72 is reflected into output 76.

Thus, while there have shown and described and pointed out fundamental novel features of the invention as applied to preferred embodiments thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. It is the intention, therefore, to be limited only as indicated by the scope of the claims appended hereto.

## Claims

1. An optical switch, comprising:
an input for receiving an input light wave;
a first MEMS shutter disposed adjacent said input and operable for movement between a first non-reflecting position and a second reflecting position in which the MEMS shutter is disposed to reflect the input light wave from said input in a first predetermined direction;
a first output coaxially aligned with said input to receive the input light wave from said input when said MEMS shutter is in said first operable non-reflecting position;
a second output arranged substantially parallel to and axially offset from said input and for receiving the input light wave by reflection from said first MEMS shutter when the first MEMS shutter is in said second reflecting position; and
reflecting means positioned in a path defined by said predetermined direction for receiving the input light wave reflected in said predetermined direction by said first MEMS shutter in said second and for re-directing the light wave received by said reflecting means toward and for receipt by said second output.

2. The optical switch in accordance with claim 1, further comprising:
a third output arranged substantially parallel to and axially offset from said input and said second output; and
a second MEMS shutter disposed adjacent said third output and operable for movement between a first non-reflecting position and a second reflecting position in which, said second MEMS shutter is disposed in said path and is oriented to received the light wave reflected by said first MEMS shutter and to reflect and re-direct the received light wave from said path toward and for receipt by said third output when said first MEMS shutter and said second MEMS shutter are in their respective second positions.

3. The optical switch in accordance with claim 1, wherein said reflecting means comprises a fixed mirror.

4. The optical switch in accordance with claim 1, wherein said reflecting means comprises a MEMS mirror.

5. The optical switch in accordance with claim 1, wherein each of said input and said first and second outputs comprises an elongated waveguide.

6. An optical switch, comprising:
an input for receiving an input light wave;
first reflecting means positioned adjacent said input for receiving from said input and reflecting the input light wave in a first predetermined direction;
second reflecting means positioned in a path defined by said first predetermined direction for receiving and further reflecting in a second predetermined direction reflected input light wave from said first reflecting means; and
a first output arranged substantially parallel to said input and axially aligned with said second predetermined direction so as to receive the further reflected input light wave from said second reflecting means.

7. The optical switch in accordance with claim 5, further comprising:
a second output arranged between said input and said first output; and
a MEMS shutter disposed adjacent said second output and operable for movement between a first non-reflecting position and a second reflecting position in which said MEMS shutter intercepts said light wave reflected in said first predetermined direction and reflects the intercepted light wave toward said second output.

8. The optical switch in accordance with claim 6, wherein each of said first and second reflecting means comprises a fixed mirror.

9. The optical switch in accordance with claim 7, wherein each of said first and second reflecting means comprises a MEMS mirror.

10. An optical switch for a planar light wave circuit, comprising:
an input for receiving an input light wave and having an end disposed at an edge of the planar light wave circuit;
a first output disposed on said planar light wave circuit and positioned at the edge of the circuit adjacent said input end;
a second output disposed on said planar light wave circuit and positioned at the edge of the circuit adjacent said input end; and
a rotating MEMS mirror positioned along the edge of said planar light wave circuit and operable for movement between a first reflecting position adapted to receive said input light wave from said input and to reflect the received light wave into said first output and a second operable reflecting position adapted to receive said input light wave from said input and to reflect the received light wave into said second output.
